Europäisches Patentamt

European Patent Office

Office européen des brevets

(11) Veröffentlichungsnummer: **0 020 860**
A1

# (12) EUROPÄISCHE PATENTANMELDUNG

(21) Anmeldenummer: 80101364.0

(22) Anmeldetag: 15.03.80

(51) Int. Cl.³: **B 60 K 31/00**

(30) Priorität: 16.06.79 DE 2924391

(43) Veröffentlichungstag der Anmeldung: 07.01.81
Patentblatt 81/1

(84) Benannte Vertragsstaaten: **DE FR GB IT NL SE**

(71) Anmelder: **ROBERT BOSCH GMBH, Postfach 50, D-7000 Stuttgart 1 (DE)**

(72) Erfinder: **Schleupen, Richard, Dipl.-Ing., Gottlob-Ansel-Strasse 6, D-7121 Ingersheim (DE)**

(54) **Einrichtung zum Begrenzen der Fahrgeschwindigkeit eines Kraftfahrzeuges.**

(57) Ein Stellglied (4, 5), das die Verstellbewegung der der Brennkraftmaschine den Brennstoff zumessenden Vorrichtung mechanisch begrenzt, ist mittels eines Sollwertgebers (17, 20, 21) eines Fahrgeschwindigkeits-Istwertgebers (18, 19) und eines die Signale der beiden Geber verarbeitenden Steuergerätes (16), das aus der Signaldifferenz ein Steuersignal bildet, betätigbar. Dabei ist das Stellglied einer Übertragungsvorrichtung in Form eines Gestänges oder Zuges zugeordnet, die die Bewegung des Gaspedales (1) auf eine Drosselklappe (11) oder das Stellglied einer Einspritzpumpe überträgt. Zur Begrenzung der Istgeschwindigkeit auf einen vorgegebenen, einstellbaren Sollwert ist das Stellglied in die Übertragungsvorrichtung in der Weise eingefügt, daß es bei Beginn des Überschreitens der Grenzgeschwindigkeit die wirksame Länge der Übertragungsvorrichtung reduziert und damit die Kraftstoffzumessung so weit vermindert, bis die Ist-Fahrgeschwindigkeit die Soll-Geschwindigkeit nicht mehr überschreitet.

EP 0 020 860 A1

Dr. Vetter

R. ⌷⌷⌷⌷
6.6.1979    A 43 X/C


ROBERT BOSCH GMBH, 7000 STUTTGART 1


## Einrichtung zum Begrenzen der Fahrgeschwindigkeit eines Kraftfahrzeuges


### Stand der Technik

Die Erfindung geht aus von einer Begrenzungseinrichtung nach der Gattung des Hauptanspruchs. Es ist bereits versucht worden, einen Geschwindigkeitsbegrenzer für Omnibusse und LKW in der Weise aufzubauen, daß in dem Verlauf des Gestänges zwischen Gaspedal und Brennstoffzumeßvorrichtung (Drosselklappe, Einspritzpumpenwelle) eine vorgespannte Koppelfeder eingebaut wurde, die eine Relativbewegung zwischen Gaspedal und Brennstoffzumeßvorrichtung bei die Kraft der Koppelfeder übersteigender Betätigungskraft zuläßt. Mit der Drosselklappenwelle oder der Welle der Einspritzpumpe ist dabei ein verschiebbarer Anschlag in Wirkverbindung, der von einem Stellglied verschoben wird. Dieser Anschlag begrenzt die Öffnungsbewegung der Einspritzpumpen- oder Drosselklappenwelle dann, wenn das Gaspedal gegen die Koppelfeder weiterbewegt wird. Er wird von dem Stellglied, beispielsweise einem Elektromotor

- 2 -

mit nachgeschaltetem Untersetzungsgetriebe, verstellt.
Dem Stellglied ist ein Steuersignal zugeführt, das aus
der Differenz der Signale eines Sollwertgebers und eines
Istwertgebers der Fahrgeschwindigkeit gebildet wird. Der
Istwertgeber erzeugt ein der momentanen Fahrgeschwindigkeit entsprechendes Signal; der Sollwertgeber erzeugt das
der gewünschten Grenzgeschwindigkeit entsprechende Signal.
Beginnt das Ist-Signal das Soll-Signal zu übersteigen, wird
durch das Steuersignal das Stellglied angesteuert und verschiebt den Anschlag so lange, bis durch Reduktion der Einspritzmenge oder die Schließbewegung der Drosselklappe die
Antriebsleistung der Brennkraftmaschine so weit zurückgenommen ist, daß die Istgeschwindigkeit gleich der Sollgeschwindigkeit und damit nicht größer als die vorgegebene
Grenzgeschwindigkeit ist. Dabei kann der Sollwertgeber auf
unterschiedliche Grenzgeschwindigkeiten einstellbar sein,
wobei eine dieser Grenzgeschwindigkeiten eine absolute
Grenzgeschwindigkeit sein kann, die nicht verstellbar ist.
Von Nachteil ist jedoch, daß die Vorspannung der Koppelfeder größer sein muß als die maximale vom Koppelgestänge
zur Betätigung der Brennstoffzumeßvorrichtung zu übertragende notwendige Kraft. Dadurch ist bei wirksamer Begrenzung und durchgetretenem Gaspedal die Koppelfederkraft
größer als die Betätigungskraft bei Vollgasfahrt. Auch
tritt bei kleineren Fußkräften eine Modulation des Gaspedalweges entsprechend der erforderlichen Stellung der
Drosselklappe bzw. Einspritzpumpenwelle auf.
Es ist auch eine Einrichtung zum Regeln der Fahrgeschwindigkeit eines Kraftfahrzeuges bekannt (DE-PS 26 09 843), bei
der das Steuersignal einen Stellmotor ansteuert, der über eine ausrückbare Kupplung die Drosselklappe oder Einspritzpumpenwelle verstellt. Eine derartige Regeleinrichtung
steuert die Kraftstoffzumessung in der Weise, daß die Ist-
Geschwindigkeit möglichst weitgehend der vorgegebenen Soll-
Geschwindigkeit gleich ist. Solche Regeleinrichtungen sind
naturgemäß sehr viel aufwendiger als ein Begrenzer.


## Vorteil der Erfindung

Die erfindungsgemäße Einrichtung mit den kennzeichnenden
Merkmalen des Hauptanspruches hat den Vorteil, daß sie bei
sehr einfachem Aufbau eine zuverlässige Begrenzung der tatsächlichen Fahrgeschwindigkeit auf die vorgegebene Soll-
Geschwindigkeit ergibt, ohne daß die Gaspedalbetätigungskraft störend erhöht werden muß. Der Herstellungs- und
Montageaufwand für die erfindungsgemäße Einrichtung ist
gering. Sie läßt sich daher wirtschaftlich einsetzen und
ermöglicht in gewünschter Weise bei Nutzfahrzeugen die Begrenzung der vom Fahrzeug erreichten Geschwindigkeit. Dies
ist insbesondere deshalb von Bedeutung, weil der Antrieb
des Nutzfahrzeuges häufig so ausgelegt ist, daß bei Fahrt
in der Ebene oder auf abschüssiger Straße die zulässige
Geschwindigkeit überschritten werden kann. Dabei kann
die zulässige Geschwindigkeit als Grenzgeschwindigkeit
sowohl durch gesetzliche Vorschriften als auch durch
technische Merkmale des Fahrzeuges, beispielsweise maximal zulässige Geschwindigkeit der Bereifung, gegeben
sein.

Durch die in den Unteransprüchen aufgeführten Maßnahmen
sind vorteilhafte Weiterbildungen und Verbesserungen der
im Hauptanspruch angegebenen Einrichtung möglich. Beispielsweise kann die Veränderung der wirksamen Länge der
Übertragungsvorrichtung zwischen Gaspedal und Brennstoffzumeßvorrichtung durch Verändern der Länge der mechanischen
Übertragungsglieder oder auch durch Verändern einer Übersetzung im Verlauf der mechanischen Übertragungsglieder
erzielt sein. Bei Vorhandensein einer Koppelfeder im Übertragungszweig kann in vorteilhafter Weise durch das Stellglied die Koppelfederlänge veränderbar sein.

Das Stellglied kann ein Elektromotor mit nachgeschaltetem
Untersetzungsgetriebe sein; es kann auch als hydraulisch
oder pneumatisch in seiner Länge veränderbares Element gestaltet sein.

Wird durch das Stellglied eine Übersetzung im Zuge der
mechanischen Übertragungsglieder verändert, so wird zweckmäßigerweise durch das Stellglied ein Gelenk einer Hebelübersetzung verschoben.

<u>Zeichnung</u>

Drei Ausführungsbeispiele der Erfindung sind in der Zeichnung dargestellt und in der nachfolgenden Beschreibung
näher erläutert. Es zeigen in stark vereinfachter und
schematisierter Darstellung Fig. 1 ein erstes Ausführungsbeispiel einer Begrenzungseinrichtung einschließlich der vorgeschalteten Geber und des Steuergerätes, Fig. 2a bis 2c ein anderes Ausführungsbeispiel mit Darstellung von drei verschiedenen Betriebszuständen, und Fig. 3a bis 3c ein weiteres Ausführungsbeispiel, ebenfalls in drei verschiedenen Betriebszuständen.

## Beschreibung der Ausführungsbeispiele

In einem nicht näher dargestellten Kraftfahrzeug ist ein Gaspedal 1 um eine fahrzeugfeste Lagerachse 2 schwenkbar; an dem Gaspedal 1 ist eine Druckstange 3 angelenkt, deren anderes Ende an einem als Gehäuse dienenden Zylinder 4 befestigt ist, der sich in Verlängerung der Druckstange 3 erstreckt. In dem Zylinder 4 ist ein Kolben 5 verschiebbar, der mit seiner Stirnseite an einer Schraubendruckfeder 6 anliegt, die zwischen dem Kolben 5 und der dem Gaspedal 1 zugewandten Seite des Zylinders 4 angeordnet ist. Eine Kolbenstange 7 ist abgedichtet aus dem Zylinder 4 herausgeführt und erstreckt sich bis zu einem Stellhebel 8, an dessen Ende sie angelenkt ist. Der Stellhebel 8 ist mit seinem anderen Ende an einer Stellwelle 9 befestigt, die eine in einer Ansaugleitung 10 angeordnete Drosselklappe 11 trägt. Die Stellwelle 9 kann auch Teil einer Diesel- oder Benzineinspritzpumpe sein, durch deren Verdrehung die Einspritzmenge verändert wird.

In den Zylinder 4 mündet in dem dem Stellhebel 8 zugewandten Endbereich eine Hydraulikleitung 12, in deren Verlauf ein Ventil 13 vorgesehen ist. Eine nicht dargestellte Hydraulikpumpe speist Hydraulikflüssigkeit in die Leitung 12, die bei geöffnetem Ventil 13 in Richtung eines Pfeiles 14
fließt.

Bei umgesteuertem Ventil 13 und vorgespannter Feder 6
fließt Hydraulikflüssigkeit aus dem Zylinder 4 über das
Ventil 13 in eine Ableitung 15.

Das Ventil 13 ist von einem Steuergerät 16 gesteuert, dem
von einem Sollwertgeber 17 und einem Istwertgeber 18 ein
Sollwert- bzw. ein Istwert-Signal zugeführt werden. Der
Eingang des Istwertgebers 18 ist mit einem Geschwindigkeitsfühler 19 verbunden. Der Eingang des Sollwertgebers
17 ist an ein Potentiometer 20 geführt, dem ein Widerstand 21 in Serie geschaltet ist. Der Widerstand 21 definiert eine maximale Grenzgeschwindigkeit, die dann eingestellt ist, wenn der Schleifer des Potentiometers 20 sich
an dem dem Widerstand 21 zugewandten Ende befindet. Wird
der Schleifer von diesem Ende wegbewegt, werden dadurch
entsprechend verminderte Grenzgeschwindigkeiten vorgegeben. Aus den vom Sollwertgeber 17 und dem Istwertgeber
18 gelieferten Signalen erzeugt das Steuergerät 16 ein
Differenzsignal und gibt dann ein entsprechendes Ausgangssignal über eine Steuerleitung 22 an das Ventil 13. Das
Ventil 13 verbindet Leitung 14 mit Leitung 12, wenn das
Istwert-Signal das Sollwert-Signal zu übersteigen beginnt,
wenn also die eingestellte Grenzgeschwindigkeit erreicht
ist bzw. ein Überschreiten dieser Geschwindigkeit einsetzt.
Wird dagegen die Grenzgeschwindigkeit unterschritten,
schaltet das Ventil 13 Leitung 12 auf Leitung 15, während
bei $V_{ist} = V_{grenz}$ das Ventil 13 die Leitung 12 verschließt.

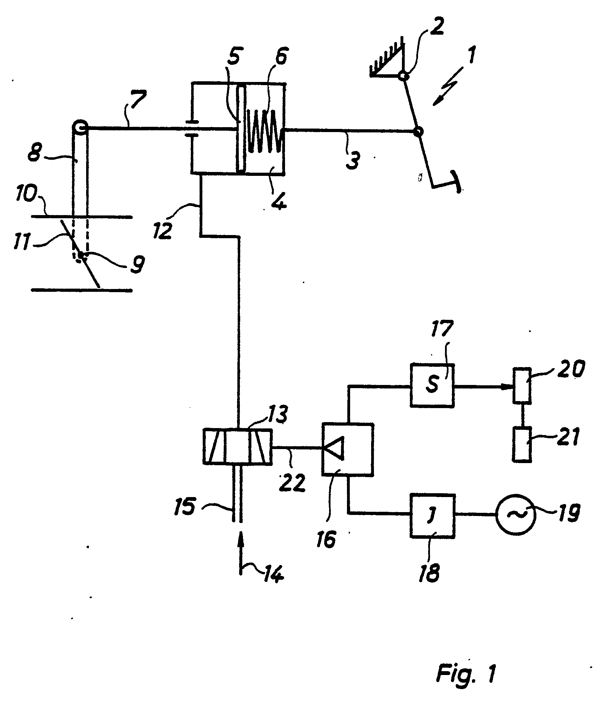

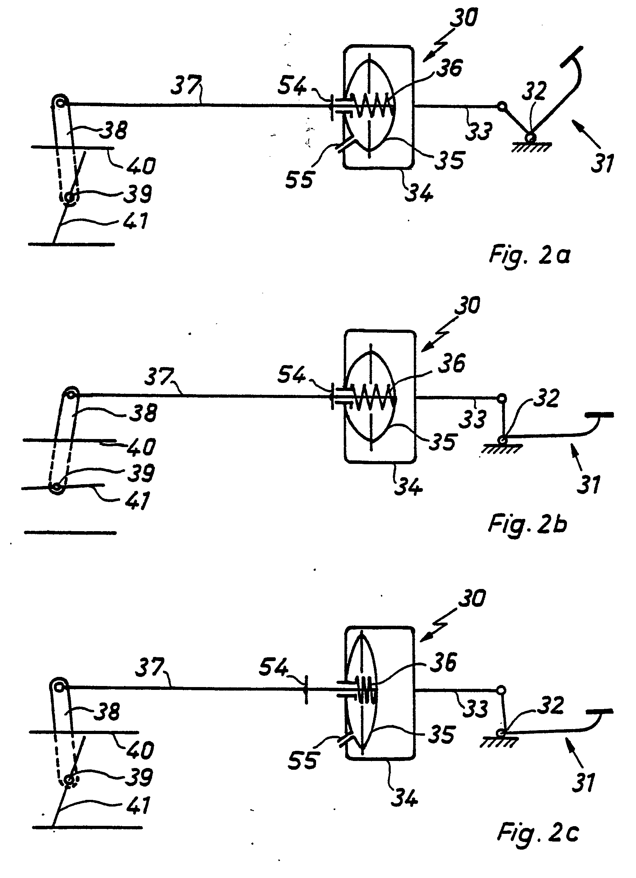

Bei der in Fig. 2 dargestellten Ausführungsform sind entsprechende Teile mit einem um gegenüber Fig. 1 30 erhöhten Bezugszeichen versehen. Geändert ist gegenüber
Fig. 1 das zwischen eine Zugstange 33 und eine Stange 37 geschaltete Stellglied 30. Es umfaßt ein an dem Ende einer Zugstange 33 befestigtes Gehäuse 34, das bei Betätigung des Gaspedales 31, also bei dessen Verschwenken um die fahrzeugfeste Lagerachse 32, bewegbar ist. Innerhalb des Gehäuses 34 ist ein Balg 35 vorgesehen, an dessen dem Gaspedal 31 zugewandten Ende eine durch das Gehäuse 34 dicht hindurchgeführte Zugstange 37 angebracht ist, deren anderes Ende an einem Stellhebel 38 angelenkt ist, der andererseits an einer Stellwelle 39 befestigt ist, die eine in einem Ansaugrohr 40 befindliche Drosselklappe 41 trägt. Der Balg ist durch eine in seinem Inneren die Zugstange 37 umgebende Schraubendruckfeder 36 in der entlasteten Position gespreizt. Die dabei erreichte Endstellung ist durch einen Anschlag 54 definiert, der an der Zugstange 37 angebracht ist und in der gewünschten Endposition an dem Gehäuse 34 bzw. einer die Zugstange 37 führenden Buchse des Gehäuses 34 zur Anlage kommt. An den Balg 35 ist ein durch das Gehäuse 34 nach außen geführter Anschlußstutzen 55 angeschlossen, der über ein nicht näher dargestelltes Steuerventil, das beispielsweise dem Ventil 13 von Fig. 1 entspricht, zu einem pneumatischen Unterdruckerzeuger geführt ist.

Bei der in Fig. 2a dargestellten Grundstellung der Teile bei Leerlauf der Anordnung ist die Schraubendruckfeder 36 nahezu entspannt und der Balg 35 gespreizt. Die Drosselklappe 41 verschließt den Querschnitt des Saugrohres 40 weitgehend. Das Gaspedal 31 nimmt unter der Wirkung einer nicht dargestellten Rückstellfeder die gezeigte Position ein.

Gibt nun der Fahrer Vollgas, beispielsweise während eines
Beschleunigungsvorganges, dann tritt er auf die Trittplatte
des Gaspedales 31 und verschwenkt es im Uhrzeigersinn bis
in die in Fig. 2b dargestellte Position. Das Stellglied 30
bleibt in sich unverändert und überträgt die volle Bewegung
der Zugstange 33 auf die Zugstange 37, die die Drosselklappe 41 in die Vollgasstellung bewegt, in der sie den
Querschnitt der Ansaugleitung 40 weitgehend freigibt.
Wird nun bei dieser Stellung des Gaspedals 31 die eingestellte Grenzgeschwindigkeit erreicht bzw. geringfügig überschritten, dann wird durch den Anschlußstutzen 55 ein Unterdruck im Balg 35 erzeugt, der ausreicht, um die Schraubendruckfeder 36 zusammenzudrücken und den Balg 35 zusammenzufalten. Dabei bewegt sich bei seine Stellung beibehaltendem Gehäuse 34 die Zugstange 37 vom Gaspedal 31 weg und
bewegt die Drosselklappe 41 so weit in die Schließstellung,
bis die Ist-Geschwindigkeit des Fahrzeuges der Soll-Geschwindigkeit, also der eingestellten Grenzgeschwindigkeit,
(nahezu) entspricht. Es versteht sich, daß ein völliges
Schließen der Drosselklappe, wie es in Fig. 2c dargestellt
ist, nur in Grenzfällen auftritt. Normalerweise wird durch
den Balg 35 die Drosselklappe nur etwas aus der Vollgasstellung zurückgestellt, bis die Antriebsleistung der
Brennkraftmaschine ausreichend reduziert ist, um gerade
noch auszureichen, das Fahrzeug mit Grenzgeschwindigkeit
zu bewegen.

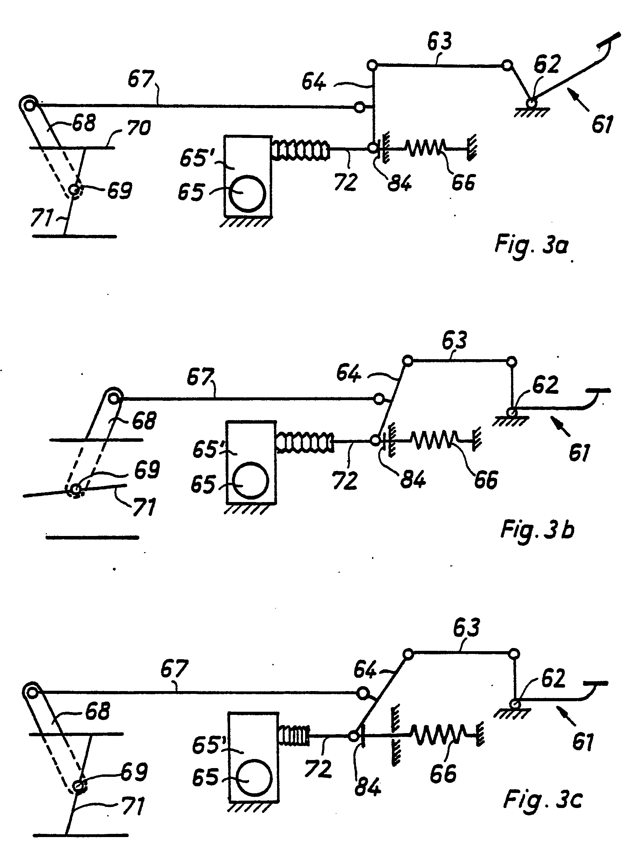

Bei der in den Fig. 3a bis 3c dargestellten Ausführungsform sind der Ausführungsform der Fig. 2a bis 2c entsprechende Teile mit einem um 30 erhöhten Bezugszeichen
versehen. An einem Gaspedal 61, das um eine fahrzeugfeste
Lagerachse 62 schwenkbar ist, ist eine Zugstange 63 angelenkt, deren anderes Ende an einem zweiarmigen Hebel 64
angelenkt ist. Die Lagerachse des zweiarmigen Hebels 64
ist gleichzeitig die Anlenkung am Ende einer Zugstange 67,
deren anderes Ende an einem Stellhebel 68 angelenkt ist,
der über eine Stellwelle 69 eine in einer Ansaugleitung 70
befindliche Drosselklappe 71 verschwenkt. Am anderen Arm
des zweiarmigen Hebels 64 ist eine Zug- oder Zahnstange 72
angelenkt, die von einem Elektromotor 65 über ein Reduziergetriebe 65' in ihrer Längsrichtung verschoben wird. An der
Zahnstange 72 ist ein Anschlag 84 angebracht, der an einem
gehäusefesten Gegenanschlag anliegt, solange die Begrenzung nicht in Wirkung ist. Eine Rückholfeder 66 hält den
Anschlag 84 in Anlage an dem Gegenanschlag.

Aus der in Fig. 3a dargestellten Leerlaufposition wird beim
Beschleunigen das Gaspedal 61 im Uhrzeigersinn verschwenkt
und verschwenkt in gleicher Weise den zweiarmigen Hebel 64
um seine Anlenkung an der Zahnstange 72. Die Zugstange 67
wird, entsprechend untersetzt, mitgenommen und öffnet die
Drosselklappe 71. Sobald die eingestellte Grenzgeschwindigkeit erreicht oder geringfügig überschritten wird, wird
von dem in Fig. 3a bis 3c nicht näher dargestellten Steuergerät ein Ausgangssignal erzeugt, das dem Elektromotor 65
zugeführt wird, der daraufhin über das Untersetzungsgetriebe
65' die Zahnstange 72 in der Richtung bewegt, in der der Anschlag 84 von seinem Gegenanschlag abhebt, wodurch die Drosselklappe 71 in Richtung auf die Schließstellung hin bewegt wird.

Nimmt der Fahrer dann, wenn die einzelnen Elemente die in Fig. 3c dargestellte Position einnehmen, das Gaspedal 61 etwas zurück, so verschwenkt die Drosselklappe 71 zunächst in Richtung Schließen. Da hierbei die Grenzgeschwindigkeit unterschritten wird, stellt zunächst der Begrenzer nach, bis der Anschlag 84 bzw. 54 wieder an dem Gegenanschlag zur Anlage kommt, womit die übliche, vom Begrenzer unbeeinflußte Wirkungsweise der Gaspedalstellungsübertragung auf die Drosselklappe wieder erreicht ist.

R. 5539

6.6.1979 A 43 X/C

ROBERT BOSCH GMBH, 7000 STUTTGART 1

Ansprüche

1. Einrichtung zum Begrenzen der Fahrgeschwindigkeit eines
Kraftfahrzeuges, mit einem Sollwertgeber, einem Fahrgeschwindigkeits-Istwertgeber und einem die Signale der
beiden Geber verarbeitenden Steuergerät, das aus der
Signaldifferenz ein Steuersignal bildet, durch das ein
Stellglied betätigbar ist, das die Verstellbewegung der
der Brennkraftmaschine den Brennstoff zumessenden Vorrichtung mechanisch begrenzt, wobei das Stellglied einer
Übertragungsvorrichtung zugeordnet ist, die der Übertragung der Bewegung eines Gaspedales auf die Brennstoffzumeßvorrichtung dient, dadurch gekennzeichnet, daß das
Stellglied (4, 5 bzw. 34, 35 bzw. 64, 65) in die Übertragungsvorrichtung (3, 7 bzw. 33, 37 bzw. 63, 67) in
der Art eingefügt ist, daß es bei Überschreiten einer
eingestellten Grenzgeschwindigkeit die wirksame Länge
der Übertragungsvorrichtung in Richtung auf eine Reduzierung der Brennstoffmenge ändert.

- 2 -

2. Einrichtung nach Anspruch 1, mit einer Übertragungs-vorrichtung mit mechanischen Übertragungsgliedern, dadurch gekennzeichnet, daß durch das Stellglied (4, 5 bzw. 34, 35) die Länge der mechanischen Übertragungsglieder (3, 7 bzw. 33, 37) verkürzbar ist.

3. Einrichtung nach Anspruch 1 oder 2, dadurch gekennzeichnet, daß durch das Stellglied (64, 65, 65') eine Übersetzung im Verlauf der mechanischen Übertragungsglieder (63, 67) veränderbar ist.

4. Einrichtung nach Anspruch 2, mit einer in den Verlauf der mechanischen Übertragungsglieder eingeschalteten Koppelfeder, dadurch gekennzeichnet, daß durch das Stellglied (4, 5 bzw. 34, 35) die Länge der Koppelfeder (6 bzw. 36) veränderbar ist.

5. Einrichtung nach einem der vorhergehenden Ansprüche, dadurch gekennzeichnet, daß das Stellglied ein hydraulisches oder pneumatisches, in seiner Länge veränderbares Element (4, 5 bzw. 34, 35) mit einem Gehäuse und einem relativ dazu bewegbaren Schieber oder Stab umfaßt.

6. Einrichtung nach einem der Ansprüche 1 bis 4, dadurch gekennzeichnet, daß das Stellglied einen Elektromotor (65) mit nachgeschaltetem Untersetzungsgetriebe (65') umfaßt, dessen Ausgang ein relativ zu seinem Gehäuse bewegbarer Schieber oder Stab (72) ist.

7. Einrichtung nach einem der Ansprüche 3 bis 6, dadurch gekennzeichnet, daß durch das Stellglied (64, 65, 65', 72) ein Gelenk einer Hebelübersetzung verschiebbar ist.

5539
0020860

Fig. 1

A 43

Fig. 2a

Fig. 2b

Fig. 2c

A 43

0020860

Fig. 3a

Fig. 3b

Fig. 3c

**0020860**
Nummer der Anmeldung

## EUROPÄISCHER RECHERCHENBERICHT

Europäisches Patentamt

EP 80 10 1364.0

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | FR - A - 1 268 559 (J.ANGOT) <br> * Seite 1, linke Spalte, Zeile 38 <br>   bis Seite 3, linke Spalte, Zeile 15; <br>   Fig. * <br> -- | 1-7 |
| | DE - A1 - 2 330 939 (D. WALDMANN) <br> * Anspruch, Seite 5, Zeilen 7 bis 26, <br>   Fig. * <br> -- | 1,2,6 |
| | FR - A1 - 2 270 118 (R. DROUVIN) <br> * Anspruch; Fig. * <br> -- | 1,2,4, 5 |
| | FR - A - 2 139 323 (R.L. CARON) <br> * Anspruch; Fig. * <br> -- | 1,2,3, 7 |
| | FR - A2 - 2 350 223 (L. RINGUET) <br> * Seite 1, Zeile 26 bis Seite 3, <br>   Zeile 24; Fig. * <br> ---- | 1,2,5 |

**KLASSIFIKATION DER ANMELDUNG (Int.Cl.³)**

B 60 K 31/00

**RECHERCHIERTE SACHGEBIETE (Int. Cl.³)**

B 60 K 31/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

☒ Der vorliegende Recherchenbericht wurde für alle Patentansprüche erstellt.

| Recherchenort | Abschlußdatum der Recherche | Prüfer |
|---|---|---|
| Berlin | 05-08-1980 | LEITZ |

EPA form 1503.1 06.78